# EUROPEAN PATENT SPECIFICATION

(11) **EP 3 267 791 B1**
(45) Date of publication and mention of the grant of the patent: **28.01.2026**
(21) Application number: 16709451.5
(22) Date of filing: 11.03.2016
(51) Int. Cl.: A01N 25/04, A01N 25/30, A01N 47/36, A01N 43/90

(54) **CONCENTRATE FORMULATIONS, AGRICULTURAL OIL DISPERSIONS, METHODS AND USES THEREOF**
KONZENTRATFORMULIERUNGEN, LANDWIRTSCHAFTLICHE ÖLDISPERSIONEN, VERFAHREN UND VERWENDUNGEN DAVON
FORMULATIONS CONCENTRÉES, DISPERSIONS D'HUILE AGRICOLES, PROCÉDÉS ET UTILISATIONS DE CELLES-CI

(30) Priority: 12.03.2015 EP 15158877
(43) Date of publication of application: 17.01.2018
(73) Proprietor: SPECIALTY OPERATIONS FRANCE, 69003 Lyon (FR)
(72) Inventor: BRAMATI, Valerio, 20020 Arese (MI) (IT); MCKNIGHT, Michelle, Philadelphia, Pennsylvania 19114 (US); BALASTRE, Marc, Singapore 276952 (SG)
(74) Representative: Delenne, Marc
(86) International application number: PCT/EP2016/055287
(87) International publication number: WO 2016/142518

(56) References cited:
- EP-A2- 0 789 999
- WO-A1-2013/043678
- WO-A1-2014/088121
- WO-A2-2009/004281
- WO-A2-2009/152827
- "Rheology Handbook - A Practical Guide to Rheological Additives", 1 May 2008, ELEMENTIS SPECIALITIES, INC., Hightstown NJ, US, article ANONYMOUS: "Rheology Handbook - A Practical Guide to Rheological Additives", pages: 1 - 48, XP055680752
- "Alkamuls VO/2003 - Product Data Sheet E 90035246", 1 April 2014 (2014-04-01), pages 1 - 2, XP055193076, Retrieved from the Internet <URL:http://www.rhodia.com/product-literature-download.action?docId=0901663680d0bf16&docLanguage=EN&docType=TDS&output=BINARY&productName=ALKAMULS+VO%2F2003> [retrieved on 20150602]

## Description

This application claims priority to European application No.EP15158877 filed on March 12, 2015.

The present invention relates to the field of agricultural formulations, for example pesticide compositions.

In particular this invention concerns oil concentrate formulations convenient for dispersing active material(s) as well as liquid emulsions obtained from such concentrate formulations, both type of compositions having excellent storage stability.

Agricultural active ingredients like agricultural pesticides, including insecticides, fungicides, herbicides, miticides and plant growth regulators as well as tank-mix adjuvants or fertilizers are generally produced in pure or highly concentrated form. However, they are to be used on agricultural operation sites in low concentration. To this end, they are usually formulated with other ingredients that enable easy dilution by the farm operator. The dilution is generally performed by mixing the agricultural concentrated formulation with water.

Two kinds of formulations represent the largest sales volumes which are emulsifiable concentrates (EC) and suspensions concentrates (SC). Such concentrated formulations are advantageous since they are easy to prepare, they have a high concentration in active material, a good stability, a high biological activity, and they are cheap. However, emulsifiable concentrates (which comprise an active agent dissolved in an organic solvent) need to use organic solvents like for example xylene, naphtalene and N-methylpyrrolidone which are potentially dangerous regarding environment and human health. In contrast, suspensions concentrates (which are stable suspensions of active agents in an aqueous liquid and are safe and easy to manipulate) are not sufficiently effective and not convenient for active agent which are sensible to water.

To solve these drawbacks a third type of formulation has been developed, namely oil dispersions. This type of compositions consists in a suspension of active material(s) in an apolar medium, generally an oily fluid intended to be diluted with water before use. The document WO2013/043678 discloses some concentrate formulations that can be readily combined with pesticide to form an oil dispersion which subsequently may be diluted, in particular by a farm operator, with water to form the corresponding pesticide emulsion. These prior art formulations include as oily vehicle at least one vegetable oil alkyl ester.

WO2009004281 discloses a method of activating an organoclay stabiliser comprising mixing the organoclay stabiliser with an emulsifier selected from the group consisting of alkyl ethoxylates, alkyl ethoxylate phosphate esters, alkyl sulphates, alkyl ammonium salts and castor oil ethoxylates, under high shcan conditions in the presence of a low polarity liquid.

EP0789999 discloses an oil-based suspension concentrate containing (a) at least one substance selected from insecticides, bait, sterilants, acaricides. nematocides, fungicides, growth regulators, herbicides and safeners; (b) at least one surfactant selected from alkyl-ethoxylates and alkylaryl-ethoxylates; (c) at least one surfactant selected from alkyl-sulphonates and alkylaryl-sulphonates; and (d) a bentonite thickening agent.

WO2009152827 discloses a suspension of herbicidal sulfonylureas comprising at least, in given wt%, (a) a herbicidal sulfonylurea, (b) an oil or mixture of oils; wherein the sulfonylurea solubility is less than 10 g/kg, (c) a dispersant soluble in oil of the type non-ionic block copolymer or polycondensed fatty acid, (d) at least two non-ionic surfactants of the type C12-C20 alcohol ethoxylated ard or propoxylated and of the type castor oil ethoxylated, (e) one ionic-emulsifier of the type C6-C18 alkyl benzenesulfonic acid, or alkaline and/or earth alkaline salts thereof and (f) a suspending agent.

According to a first aspect, the present invention is directed to a non-aqueous, emulsifiable and pourable concentrate formulation, in particular useful for preparing or vehiculing an agricultural active material, comprising :
a. at least 20 % by weight of at least one non-ionic surfactant chosen from polyethylene glycol esters of fatty acids surfactants, relative to the total weight of the concentrate formulation;
b. a liquid medium wholly or partly formed from at least one non-esterified vegetable oil or mixtures thereof;
c. at least one phyllosilicate, said phyllosilicate being present in a content of less than or equal to 5 % by weight relative to the total weight of the concentrate formulation; and
d. at least one activator of said phyllosilicate.

According to a preferred embodiment, the concentrate formulation of the invention contains less than 20 % by weight of vegetable oil alkyl ester, for example less than 10 % by weight, for example less than 5 % by weight, relative to its total weight. Preferably it is free (less than 0.1 % by weight, or even 0 % by weight) from vegetable oil alkyl ester.

According to one embodiment, the non-esterified vegetable oil or a mixture thereof may advantageously constitute 100 % by weight of the liquid medium (b) in the concentrate formulation of the invention.

Should the disclosure of any patents, patent applications, and publications conflict with the description of the present application to the extent that it may render a term unclear, the present description shall take precedence.

For the purpose of the present invention, the term "pourable" means a composition of suitable viscosity, for example of less than 10,000 mPa.s, preferably less than 3,000 mPa.s measured at 20 rotations per minute (rpm) and 20°C according to the CIPAC test normed MT 192.

For the purpose of the present invention, the term "emulsifiable" means a composition that forms an emulsion when diluted into water and mixed by inversion of the vial. Preferably, after 10 inversions of the vial (CIPAC MT36 and MT180) such emulsion is stable at least 30 minutes, and in particular two hours after its formation ("stable" meaning that no or only little phase separation of cream is observed).

As shown in the Examples, a concentrate formulation according to the invention is particularly advantageous for stabilizing a dispersion of active material such as agricultural active materials that presents a good storage stability, while still being pourable and emulsifiable when diluted with water.

Furthermore, according to the invention, the concentrate formulations are less, or even not, sensible to syneresis reactions. Advantageously only little or even no phase separation may occur in the concentrate formulations of the invention.

For the purpose of the present invention, the dispersed active material may be a solid or a liquid oil-insoluble active material.

For the reasons stated in the preamble, the invention is however preferably directed to solid active materials as they are typically more difficult to formulate in conventional EC or SC formulations.

The inventors have shown that the claimed concentrate formulations as well as the emulsions obtained by diluting such concentrates with water exhibit a good storage stability.

For the purpose of the present invention the expression "good storage stability" means that the concentrate formulations and/or the emulsion obtained by diluting such concentrates with water remain homogeneous (i.e they almost do not exhibit phase separation) over time, in particular they stay almost homogeneous when stored for at least one week at 0°C, or for at least 2 weeks at 54°C or for one month at 45°C (standardized tests CIPAC MT 39.3 and MT 46.3).

For the purpose of the present invention, "room temperature" means a temperature ranging from 18 to 25°C.

The advantages of the concentrate formulation according to the invention, like its low viscosity, its small or non-syneresis, its non-settling of solids are precisely mainly controlled through the use of its three components system (a), (b) and (c).

Thus, in a preferred embodiment, the concentrate formulation is characterized in that component (a) and component (b) are present in a weight ratio (a)/(b) ranging from 0.1 to 4 and preferably from 0.25 to 1.25.

In one embodiment, component (a) and component (b) are present in a weight ratio (a)/(b) ranging from 0.1 to 1.25, for instance from 0.1 to 0.80.

In another embodiment, component (a) and component (b) are present in a weight ratio (a)/(b) ranging from 0.25 to 4, for example from 0.40 to 0.80.

According to a second aspect, the invention focuses on the use of a concentrate formulation according to the invention for preparing a liquid aqueous emulsion or a suspoemulsion.

According to a third aspect, the invention targets the use of a concentrate formulation according to the invention for preparing an agricultural, e.g. pesticidal, oil dispersion.

According to a fourth aspect, the invention concerns an emulsifiable and stable agricultural, e.g. pesticidal, oil dispersion comprising :
(a) at least one polyethylene glycol ester of fatty acid surfactant as non-ionic surfactant;
(b) a liquid medium wholly or partly formed from at least one non-esterified vegetable oil or mixtures thereof;
(c) at least one phyllosilicate;
(d) at least one activator of said phyllosilicate; and
(e) at least one agricultural active material,
wherein components (a) and (b) are present in a weight ratio (a)/(b) ranging from 0.25 to 4 and preferably from 0.25 to 1.25, for example from 0.40 to 0.80.

For the purpose of the invention pesticidal active material are preferably biologically active compounds used to control agricultural pests and include, for example, herbicides, plant growth regulators, crop dessicants, fungicides, bacteriocides, bacteriostats, insecticides, and insect repellants.

However, the non-aqueous emulsifiable and pourable concentrate formulations of the invention may also be convenient for the preparation of concentrated fertilizers, adjuvants and other agricultural or bioactive compositions. They allow to achieve stable concentrated formulations thereby convenient to store and transport.

As detailed here-after, the non-aqueous emulsifiable and pourable concentrate formulations of the invention provide a storage and delivery medium for a great diversity of bioactive agents.

At last, the non-aqueous active concentrates are also readily dispersible for easy mixing and dilution with water at the user sites.

Thus, according to a fifth aspect, the invention is aimed at a method for making an agricultural, e.g. pesticidal, oil dispersion according to the invention comprising the step of mixing a concentrate formulation according to the invention with at least one agricultural, e.g. pesticidal, active material.

According to a sixth aspect, the invention relates to the use of an agricultural, e.g. pesticidal, oil dispersion according to the invention for preparing a liquid agricultural, e.g. pesticidal, aqueous emulsion in particular convenient for spraying.

Described is a method of preventing and/or combating infestation of plants by pests and/or of regulating plant growth comprising the application on said plant or locus of a spray mixture obtained by diluting with some water an agricultural, e.g. pesticidal, oil dispersion according to the invention or by adding at least one agricultural, e.g. pesticidal, active material and water to a concentrate formulation according to the invention, but this method does not form part of the invention.

### CONCENTRATE FORMULATION

As above mentioned the invention mainly relates to a non-aqueous emulsifiable and pourable concentrate formulation including in a liquid medium wholly or partly formed from at least one non-esterified vegetable oil or mixtures thereof (b), at least 20 % by weight of at least one specific surfactant (a) and at least one phyllosilicate like preferably a modified hectorite in a content of less than or equal to 5 % by weight (c), with at least one activator thereof (d).

### Non-ionic surfactant

For the purpose of the present invention, the term "surfactant" means an amphiphilic compound that comprises a hydrophilic moiety and a hydrophobic moiety and that, when present in water, lowers the surface tension of water.

A composition according to the invention contains at least one non-ionic surfactant (a) selected among the group consisting of polyethylene glycol esters of fatty acids.

Suitable polyethylene glycol esters of fatty acids surfactants include polyethylene glycol fatty acid monoesters and polyethylene glycol fatty acid diesters, more typically mono- and di-esters of polyethylene glycols and saturated or unsaturated (C₈-C₂₂), more typically (C₁₂-C₁₈), fatty acids and mixtures thereof, such as for example, poly(ethylene glycol) monomyristates, poly(ethylene glycol) monostearates, poly(ethylene glycol) distearates, poly(ethylene glycol) monooleates, poly(ethylene glycol) dioleates, poly(ethylene glycol) linolenates, poly(ethylene glycol) dibehenates, poly(ethylene glycol) monobehenates, poly(ethylene glycol) monoerucates, and their mixtures.

Examples of suitable polyethylene glycol esters of fatty acids are commercialized by Solvay under the names Alkamuls AP, Alkamuls A, Alkamuls VO/2003 and Alkamuls VO2005.

Alkamuls VO/2003 and Alkamuls VO2005 are particularily preferred according to the present invention.

As above mentioned, a concentrate formulation according to the invention contains at least 20 % by weight of non-ionic surfactant(s) (a) relative to its total weight.

A concentrate according to the invention may contain from 20 to 60 % by weight, for example from 20 to 50 % by weight, and in particular from 25 to 45 % by weight of non-ionic surfactant(s) (a) relative to its total weight. For instance a concentrate of the invention may contain from 20 to 50 % by weight, in particular from 20 to 40 % by weight, of non-ionic surfactant(s) (a) relative to its total weight.

The specific surfactant used according to the invention contributes to the obtention of a pourable concentrate, and facilitates emulsification when the concentrate is placed in the presence of water. It also provides stabilization over time of the so-formed emulsion by limiting, or even avoiding, phase separation.

### Liquid medium

The liquid medium (b) of the concentrate formulations according to the invention comprises (and preferably is constituted of) at least one non-esterified vegetable oil or a mixture thereof.

For the purpose of the present invention, "non-esterified vegetable oil" means a native vegetable oil that is chemically not transformed and in particular not esterified. In other words, it is equivalent to its natural form. Within the context of the present invention non-esterified vegetable oils are understood to be triglycerides or mixtures of triglycerides.

More particularly, this vegetable oil or mixtures thereof constitutes the liquid phase of the concentrate and is dedicated to vehicle at least the surfactant, the thickener (phyllosilicate) and activator thereof requested according to the invention. As shown in the following examples, it is the combination of all these components which allows achieving a pourable liquid medium wherein at least one active material(s) may be efficiently suspended for a long period of time.

For the purpose of the present invention, "liquid medium" means a medium that is in the liquid phase at room temperature and a pressure of one atmosphere.

These vegetable oils may be selected for example in the group consisting of soybean oil, corn oil, cottonseed oil, sunflower oil, maize oil, rice oil, olive oil, linseed oil, rapeseed oil, canola oil, palm oil, coconut oil and mixtures thereof.

Rapeseed oil, canola oil, soybean oil and corn oil are particularly convenient for the invention.

A concentrate according to the invention may contain from 10 to 90 % by weight, for instance from 40 to 85 % by weight, in particular from 40 to 80 % by weight, for instance from 50 to 75 % by weight relative to its total weight, of a liquid medium (b), and in particular of a non-esterified vegetable oil or mixtures thereof.

### Phyllosilicate

As previously stated, a concentrate formulation according to the invention also contains as essential component at least one phyllosilicate (c). This phyllosilicate is mainly used as a thickener.

The phyllosilicate is present in an amount of less than or equal to 5 % by weight relative to the total weight of the formulation.

Examples of suitable phyllosilicates are synthetic clays, such as laponite, or naturally occurring clays, such as bentonite, hectorite and montmorillonite. Clays of this type are often chemically treated to render them compatible with the liquid medium in which they are to be incorporated. For example, bentonite and hectorite clays for use in non-polar are often treated with fatty amines or fatty quaternary ammonium compounds and are commercially available under the name Bentone (Rheox Inc., New Jersey).

In one embodiment, the phyllosilicate (c) comprises an inorganic, typically aluminosilicate or magnesium silicate, colloid-forming clay, typically a smectite (also known as montmorillonoid) clay. These clay materials can be described as expandable layered clays, wherein the term "expandable" as used herein in reference to such clay relates to the ability of the layered clay structure to be swollen, or expanded, on contact with water.

Smectites are three-layered clays. There are two distinct classes of smectite-type clays. In the first class of smectites, aluminum oxide is present in the silicate crystal lattice and the clays have a typical formula of Al₂(Si₂O₅)₂(OH)₂. In the second class of smectites, magnesium oxide is present in the silicate crystal lattice and the clays have a typical formula of Mg₃(Si₂O₅)(OH)₂. The range of the water of hydration in the above formulas can vary with the processing to which the clay has been subjected. This is immaterial to the use of the smectite clays in the present compositions in that the expandable characteristics of the hydrated clays are dictated by the silicate lattice structure. Furthermore, atomic substitution by iron and magnesium can occur within the crystal lattice of the smectites, while metal cations such as Na⁺, Ca²⁺, as well as H⁺, can be present in the water of hydration to provide electrical neutrality. Although the presence of iron in such clay material is preferably avoided to minimize chemical interaction between clay and optional composition components, such cation substitutions in general are immaterial to the use of the clays herein since the desirable physical properties of the clay are not substantially altered thereby.

The layered expandable aluminosilicate smectite clays useful herein are further characterized by a dioctahedral crystal lattice, whereas the expandable magnesium silicate smectite clays have a trioctahedral crystal lattice.

Suitable smectite clays, include, for example, montmorillonite (bentonite), volchonskoite, nontronite, beidellite, hectorite, saponite, sauconite and vermiculite, are commercially available.

As noted above, the clays employed in the compositions of the present invention contain cationic counter ions such as protons, sodium ions, potassium ions, calcium ions, magnesium ions and the like. It is customary to distinguish between clays on the basis of one cation which is predominately or exclusively absorbed. For example, a sodium clay is one in which the absorbed cation is predominately sodium. Such absorbed cations can become involved in exchange reactions with cations present in aqueous solutions.

Commercially obtained clay materials can comprise mixtures of the various discrete mineral entities. Such mixtures of the minerals are suitable for use in the present compositions. In addition, natural clays sometimes consist of particles in which unit layers of different types of clay minerals are stacked together (interstratification). Such clays are called mixed layer clays, and these materials are also suitable for use herein.

Preferably, the phyllosilicate is a hectorite organoclay obtained by reacting hydrophilic clay with quaternary ammonium compounds. For example, the phyllosilicate may be chosen from disteardimonium hectorite (such as Bentone^{®} 38 VCG from Elementis), tetraalkyl ammonium hectorite (such as Bentone^{®} 38 from Elementis) or stearalkonium hectorite (such as Bentone^{®} 27 VCG from Elementis).

In one embodiement, the phyllosilicate used in the present invention may be selected from the group consisting of organically modified bentonite, hectorite and smectite clays, for example tetraalkyl ammonium bentonite (for example Bentone(TM) 34), tetraalkyl ammonium hectorite (for example Bentone(TM) 38), tetra(alkyl/aryl) ammonium bentonite (for example Bentone SD(TM)-1, Bentone(TM) 52, Bentone(TM) 120, and Bentone(TM) 1000), alkylaryl ammonium hectorite (for example Bentone SD(TM)-3).

In particular, the phyllosilicate used in the present invention may be selected from the group consisting of tetraalkyl ammonium bentonite, tetraalkyl ammonium hectorite and tetra(alkyl/aryl) ammonium bentonite. It is preferably tetraalkyl ammonium hectorite.

A concentrate of the invention advantageously contains from 0.1 to 5 % and in particular from 0.5 to 4 % by weight, for instance from 1 to 3 % by weight, for instance from 1.5 to 3 % by weight of phyllosilicate with respect to its total weight.

In one embodiment, a concentrate of the invention may contain from 0.1 to 3 % by weight of phyllosilicate, for instance from 0.1 to 1.5 % by weight, with respect to its total weight.

In another embodiment, a concentrate of the invention may contain from 1.5 to 5 % by weight of phyllosilicate, for instance from 3 to 5 % by weight, with respect to its total weight.

Regarding the activator (d) of the phyllosilicate, it may be chosen among polar solvents. Polar solvents help to "wet" the clay and effect delamination thus facilitating the dispersion of the clay in the liquid medium. Examples of suitable clay activators are water, lower alkanols, such as methanol and ethanol, lower alkyl ketones such as acetone and methylethylketone and especially lower alkylene carbonates such as propylene carbonate.

A concentrate of the invention may advantageously contain from 10 to 200 % and in particular from 50 to 150 % by weight of activator (d) with respect to the weight of phyllosilicate (c).

A concentrate of the invention may advantageously contain from 0.1 to 5 % and in particular from 0.5 to 4 % by weight, for instance from 1 to 3 % by weight, for instance from 1.5 to 3 % by weight of activator (d) with respect to its total weight.

In one embodiment, a concentrate of the invention may contain from 0.1 to 3 % by weight of activator, for instance from 0.1 to 1.5 % by weight, with respect to its total weight.

In another embodiment, a concentrate of the invention may contain from 1.5 to 5 % by weight of activator, for instance from 3 to 5 % by weight, with respect to its total weight.

Naturally, a concentrate formulation according to the invention may further contain any additive usually contemplated in phytosanitary formulation like for example safeners or biocides.

According to a specific embodiment, the claimed concentrate formulations may comprise at least, and preferably consists in:
(a) 20 to 60 % by weight of polyethylene glycol ester(s) of fatty acid(s) surfactant(s);
(b) 20 to 80 % by weight of one non-esterified vegetable oil or mixtures thereof;
(c) 1 to 5 % by weight of phyllosilicate(s) and in particular of modified hectorite; and
(d) 0.3 to 3 % by weight of activator of said phyllosilicate(s) and in particular of propylene carbonate.

A concentrate formulation according to the invention may be obtained by adding, in the order listed, a non-esterified vegetable oil, a phyllosilicate as thickener, an activator for the thickener and a surfactant according to the invention to a homogenizer, and blending the compositions after each addition.

More particularly such a concentrate may be obtained as detailed in Example 1.

As shown in Example 1, the concentrate formulations according to the invention are pourable. In particular, they have a viscosity ranging from 500 to 3000 mPa.s.

The viscosity of the concentrate formulations may be measured on a Brookfield viscometer with a LV2 or LV3 spindle at a rotational speed of 20 rotations per minute (rpm).

Moreover, the concentrate formulations according to the invention show a good storage stability, are emulsifiable and provide stable emulsions when diluted into water.

Indeed the obtained emulsions appear to be stable two hours after their formation which means that no or only little phase separation is observed and no or only a little quantity of cream is formed during this period of time.

### APPLICATIONS

As stated previously, the concentrate formulations according to the invention allow to achieve stabilized oil dispersions or emulsions with a great diversity of salts and/or active materials, in particular active compounds used to control agricultural pests. However, these concentrate formulations may also be convenient for vehiculing other active materials like fertilizers. These active materials and/or salts may be of very different chemical nature, like for example organic, inorganic, liposoluble or not.

The concentrate formulations may be highlighted in many ways.

Firstly, they may be used as final oil dispersions that are directly prepared by the farm operators by dilution of the concentrates with water and optionally by addition of some additives.

Moreover, they may be used by industrial firms as vehicles for a plurality of agricultural, e.g. pesticidal active materials.

Thus, the farm operators may prepare pulverizable liquid compositions and in particular aqueous emulsions or suspoemulsions by diluting a concentrate according to the invention. Generally, they just proceed to a dilution with water and oil if necessary, and optionally also supplement the so-obtained pulverizable formulation with at least one ingredient chosen from salts, hydrocolloids and their mixtures. Of course, it is also possible for a concentrate formulation according to the invention to already contain such a material.

More particularly, the salts may be chosen among sodium carbonate, sodium bicarbonate, ammonium sulfate and their mixtures.

As hydrocolloid particularly convenient for the invention, may be cited the guar.

Thus, a concentrate formulation according to the invention may be used by the farm operators for preparing different pulverizable compositions which may be kept for a long time without any undesirable phenomenon of demixtion.

The non-aqueous concentrate formulations supplemented with at least one ingredient chosen from salts like sodium carbonate, sodium bicarbonate, ammonium sulfate or their mixtures; hydrocolloids such as guar; and their mixtures as well as the corresponding emulsions obtained by a dilution of the concentrates into water, are also known under the name of tankmix.

A tankmix may be obtained by adding to a concentrate formulation according to the invention prepared as above mentioned, at least an ingredient chosen from salts, hydrocolloids and their mixtures to a homogenizer. The so obtained composition is then blended and diluted or not with water to form an emulsion.

Thus, according to a specific embodiment a tankmix according to the invention contains less than 2 % by weight of water and preferably is anhydrous.

Tankmix formulations according to the invention are pourable, show a good storage stability, are emulsifiable and provide stable emulsions when diluted into water.

The concentrate formulation according to the invention is also particularly interesting for industrial firms which, by using only one concentrate, may prepare a great diversity of pesticidal oil dispersions.

Thus, as previously disclosed, a concentrate formulation according to the invention may further be supplemented with at least one pesticidal active material to form a pesticidal oil dispersion. As usual, this pesticidal oil dispersion may be wet-milled to reduce particle size of the active(s).

The concentrates of the invention are particularly convenient for the stable dispersion of solid active materials.

In particular, a pesticidal oil dispersion according to the invention may contain until 50 % in particular from 4 to 20 % by weight of solid pesticidal active material(s) with respect to its total weight.

The particule size of such active materials preferably is lower than 50 µm in particular lower than 20 µm and more particularly lower than 10 µm. This size may be measured by laser diffraction (CIPAC MT 187) or rough estimation of average diameter by optical microscopy.

Examples of suitable insoluble pesticidal active material are abamectin, azamethiphos, azoxystrobin, cyproconazole, bordeaux mixture, carbendazim, chlorsulfuron, copper hydroxide, copper oxide, copper oxychloride, cymoxanil, diflubenzuron, PMP, ethofumesate, DMP, lenacil, fenoxaprop-p-ethyl, iodosulfuron, florasulam, flutriafol, imidacloprid, imidacloprid, b-cyfluthrin, indoxacarb, iprodione, isoproturon, mancozeb, copper oxy, metamitron, nicosulfuron, rimsulfuron, thiacloprid, deltamethrin, thiobendazole, uniconazole, difenconazole, oxyfluorfen, quizalofop-p-ethyl, tebuconazole and their mixtures.

More particularly such a pesticidal oil dispersion may be obtained as detailed in Examples 2 and 3.

Later, when the farm operators want to use the pesticidal oil dispersion, they just have to dilute it into water to form an emulsion or suspoemulsion.

It has to be noticed that the concentrate formulations according to the invention keep their storage stability even when supplemented with active materials as shown in Example 2 and 3.

These examples also show that these pesticidal oil dispersions are still pourable. In particular, they have a viscosity ranging from 500 to 3000 mPa.s.

At last, these examples show that the pesticidal oil dispersions according to the invention are emulsifiable and provide stable emulsions when diluted into water. Indeed the obtained emulsions appear to be stable two hours after their formation which means that no or only little phase separation is observed and no or only a little quantity of cream is formed during this time.

The following examples are not limiting and serve merely to illustrate the invention.

### EXAMPLES

### Example 1 - Concentrate formulation

The composition of Example 1 was made by adding, in the order listed and in the contents set forth in Table 1 below, a non-esterified vegetable oil (rapeseed oil), a thickener (organic derivative of hectorite clay: Bentone^{®} 38 provided by Elementis), an activator for the thickener (propylene carbonate) and a non-ionic surfactant (Alkamuls VO/2003, provided by Rhodia Inc.) to a homogenizer (Ultra Turrax high speed homogenizer or IKA CMS 2000).

Process :
1. Charge the non-esterified vegetable oil and propylene carbonate into blender and begin agitation
2. Charge the thickener (Bentone^{®} 38) into blender
3. Circulate until full activation of the thickener
4. Stop circulation and charge the non-ionic surfactant (Alkamuls VO/2003), pursue agitation

The viscosity of this composition was measured using a Brookfield Rheometer equipped with a LV2 spindle at 20 rpm.

The results are given in Table 1 below.

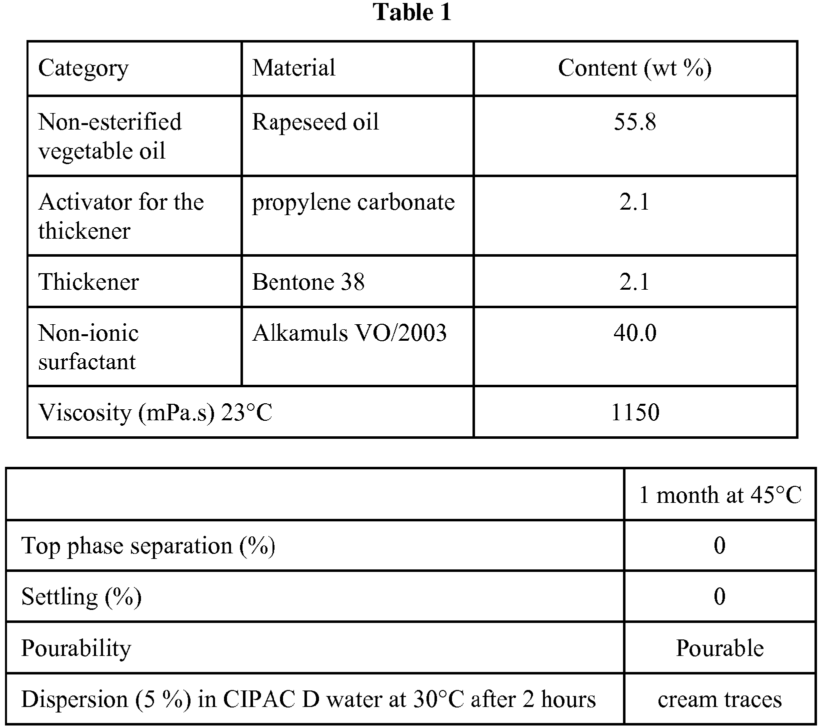

### Example 2 - Concentrate formulation

Process :
1. Charge non-esterified vegetable oil into blender and begin agitation at 50 %
2. Charge the thickener (Bentone^{®} 38) into blender
3. Charge activator into blender and increase agitation to 100 %. Allow to mix.
4. Circulate through Kady Mill Model OCHFP (high shear) until full activation of the thickener
5. Stop circulation through Kady Mill (high shear) and charge the non-ionic surfactant (Alkamuls VO/2003), at 50 % blender agitation

The results are given in Table 2 below.

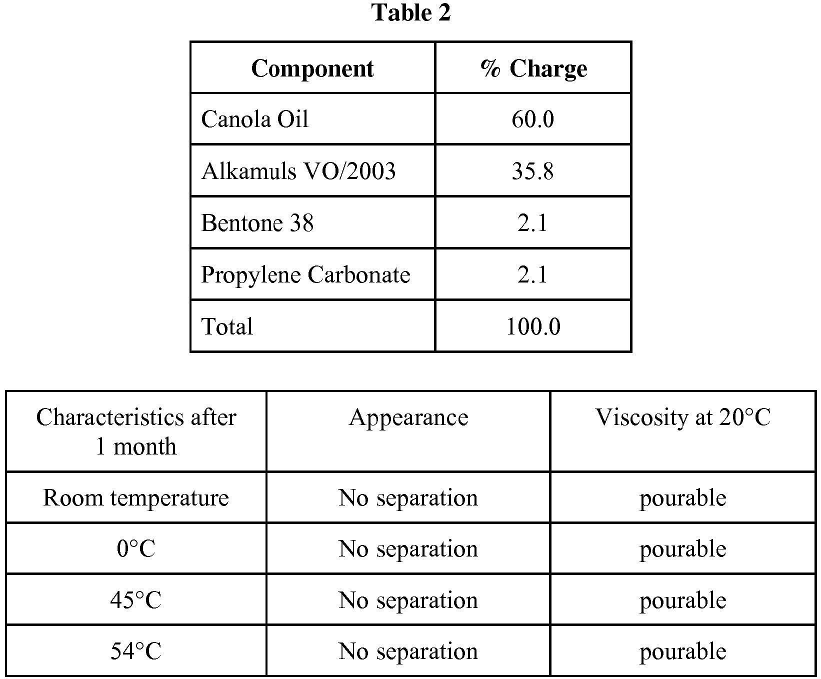

### Example 3- Pesticidal oil dispersion formulation with nicosulfuron as active agent

a) The composition of Example 3 was made by adding in the contents set forth in Table 3 below, the concentrate formulation of example 1, an active compound (technical nicosulfuron 96 % purity) and a non-modified vegetable oil (rapeseed oil) to a homogenizer (Ultra Turrax high speed homogenizer). The so obtained composition is then wet-milled for 20 minutes at 3300 rpm (motor mill apparatus).

The viscosity of this composition was measured using a Brookfield Rheometer equipped with a LV2 spindle at 20 rpm.

**Table 3**

| Material | Content (g/l) |
|---|---|
| Concentrate formulation | 450 (of concentrate of Ex.1) |
| Nicosulfuron (tech. 96 %) | 42 |
| Rapeseed oil | 462 |
| Viscosity (mPa.s) | 1900 at 23°C |

The mean size of the particles of nicosulfuron has been measured in the composition of Example 3 and is between 2 to 6 µm diameter (optical microscopy) which is satisfactory regarding the invention.

b) The stability of the pesticidal oil dispersion of Example 3 to storage was then evaluated using Collaborative International Pesticides Analytical Council ("CIPAC") Method 46.3, "Accelerated storage procedure", as follows.

The volume proportion of phase separation of the composition was recorded by eyes while using a decimeter to quantify % of top or bottom separation (measured separation height * 100 divided by total formulation height) after a storage at 45°C during 1 month.

This test enable to stimulate an accelerated aging of the compositions and thus to evaluate the evolution of its stability over time.

The following experiments have also been made after the storage test of the composition of Example 3 :
- the viscosity was measured using a Brookfield Rheometer equipped with a LV3 spindle at 20 rpm;
- the pourability was evaluated by eyes while inverting the vial;
- the mean size of the particles of nicosulfuron was measured by optical microscopy ;and
- the composition was diluted in CIPAC D water to form an emulsion that contains 1 % of the concentrate formulation, at a temperature of 30°C (dispersion test, CIPAC MT36). Two hours after its formation its stability has been evaluated by the observation of the formation of any phase separation of cream or not.

The corresponding results are given in Table 4 below.

**Table 4 - Results of the tests realized on pesticidal dispersion of Ex.3**

| | 1 month at 45°C |
|---|---|
| Top phase separation (%) | 7 |
| Viscosity (cP) | 1900 at 23°C |
| Pourability | Pourable |
| Mean size of the particles of nicosulfuron | 3µm |
| Dispersion in CIPAC D water at 30°C after 2 hours | Cream traces |

The results clearly show that the pesticidal oil dispersion of example 3, exhibits a good storage stability regardless of the storage conditions since the phase separation (top separation) is very low. No bottom separation (settling) was observed. This indicates that this composition is stable over time, which is a desired outcome of the present invention.

These results also point out that the viscosity of the composition remains low over time such that it is still pourable even after a long time of storage.

Moreover, these results emphasize that the exemplified pesticidal dispersion which have been diluted in water to form an emulsion is stable 2 hours after its formation even after a long time of storage of the corresponding pesticidal dispersion.

The mean size of the particles of nicosulfuron when measured is less than 10 µm as requested.

### Example 4 - Pesticidal oil dispersion formulation with abamectin as active agent

a) The composition of Example 4 was made by adding in the contents set forth in Table 5 below, the concentrate formulation of example 1, an active compound (technical abamectin 95 % purity) and a non-modified vegetable oil (rapeseed oil) to a homogenizer (Ultra Turrax high speed homogenizer). The so obtained composition is then wet-milled for 20 minutes at 3300 rpm (motor mill apparatus). The viscosity of this composition was measured using a Brookfield Rheometer equipped with a LV2 spindle at 20 rpm.

**Table 5**

| Material | Content (weight %) |
|---|---|
| Concentrate formulation | 50 (of concentrate of Ex.1) |
| Abamectin (tech. 95 %) | 9 |
| Rapseed oil | 41 |
| Viscosity (mPa.s) | 1220 at 23°C |

The mean size of the particles of abamectin has been measured in the composition of Example 4 and is between 2 to 8 µm diameter (optical microscopy) which is satisfactory regarding the invention.

b) As for the pesticidal oil dispersion of Example 3, the stability of the pesticidal oil dispersion of Example 4 to storage was evaluated in the same conditions as in example 3.

Moreover, the viscosity, the pourability, the mean size of the particles of abamectin and the stability of the composition when diluted in water to form an emulsion have been evaluated after the storage test, in the same conditions as for the pesticidal oil dispersion of Example 3.

The corresponding results are given in Table 6 below.

**Table 6 - Results of the tests realized on pesticidal dispersion of Ex.4**

| | |
|---|---|
| | 1 month at 45°C |
| Top phase separation (%) | 3 |
| Viscosity (cP) | 1940 at 23°C |
| Pourability | Pourable |
| Mean size of the particles of nicosulfuron | 5µm |
| Dispersion in CIPAC D water at 30°C after 2 hours | 0.5 % |

The results clearly show that the pesticidal oil dispersion of example 4, exhibits a good storage stability regardless of the storage conditions since the phase separation (top separation) is very low. No bottom separation (settling) was observed. This indicates that this composition is stable over time, which is a desired outcome of the present invention.

These results also point out that the viscosity of the composition remains low over time such that it is still pourable even after a long time of storage.

Moreover, these results emphasize that the exemplified pesticidal dispersion which have been diluted in water to form an emulsion is stable 2 hours after its formation even after a long time of storage of the corresponding pesticidal dispersion.

The mean size of the particles of nicosulfuron when measured is less than 10 µm as requested.

## Claims

1. A non-aqueous, emulsifiable and pourable concentrate formulation comprising:
(a) at least 20% by weight of at least one non-ionic surfactant chosen from polyethylene glycol esters of fatty acids surfactants, relative to the total weight of the concentrate formulation;
(b) a liquid medium wholly or partly formed from at least one non esterified vegetable oil or mixtures thereof;
(c) at least one phyllosilicate, said phyllosilicate being present in a content of less than or equal to 5% by weight relative to the total weight of the concentrate formulation; and
(d) at least one activator of said phyllosilicate.

2. The concentrate formulation according to claim 1 wherein components (a) and (b) are present in a weight ratio (a)/(b) ranging from 0.1 to 4, preferably from 0.25 to 1.25.

3. The concentrate formulation according to claim 1 or 2 comprising at least:
(a) 20 to 60% by weight of polyethylene glycol ester(s) of fatty acid(s) surfactant(s);
(b) 20 to 80% by weight of one non-esterified vegetable oil or mixtures thereof;
(c) 1 to 5% by weight of phyllosilicate(s) and in particular of modified hectorite; and
(d) 0.3 to 3% by weight of activator of said phyllosilicate(s) and in particular of propylene carbonate.

4. The concentrate formulation according to any one of the preceding claims, **characterized in that** it further comprises at least one ingredient chosen from salts like sodium carbonate, sodium bicarbonate, ammonium sulfate or their mixtures; hydrocolloids such as guar; and their mixtures.

5. Use of a concentrate formulation according to any one of previous claims for preparing a liquid aqueous emulsion or a suspoemulsion.

6. Use of a concentrate formulation according to any one of claims 1 to 5 for preparing an agricultural oil dispersion.

7. A method for making an emulsifiable and stable agricultural oil dispersion comprising:
(a) at least one polyethylene glycol ester of fatty acid surfactant as non-ionic surfactant;
(b) a liquid medium wholly or partly formed from at least one non-esterified vegetable oil or mixtures thereof;
(c) at least one phyllosilicate;
(d) at least one activator of said phyllosilicate; and
(e) at least one agricultural active material,
wherein components (a) and (b) are present in a weight ratio (a)/(b) ranging from 0.25 to 4, and preferably from 0.25 to 1.25, comprising the step of mixing a concentrate formulation according to any one of claims 1 to 4 with at least one agricultural active material.

## Patentansprüche

1. Nichtwässrige, emulgierbare und gießbare Konzentrat-Formulierung, umfassend:
(a) mindestens 20 Gew.-%, bezogen auf das Gesamtgewicht der Konzentrat-Formulierung, mindestens eines nichtionischen Tensids, das aus Fettsäuren-Polyethylenglykolester-Tensiden ausgewählt ist;
(b) ein Flüssigmedium, das ganz oder teilweise aus mindestens einem nicht veresterten Pflanzenöl oder Gemischen davon besteht;
(c) mindestens ein Phyllosilikat, wobei das Phyllosilikat mit einem Gehalt von kleiner oder gleich 5 Gew.-%, bezogen auf das Gesamtgewicht der Konzentrat-Formulierung, vorhanden ist, und
(d) mindestens einen Aktivator des Phyllosilikats.

2. Konzentrat-Formulierung nach Anspruch 1, wobei die Komponenten (a) und (b) in einem Gewichtsverhältnis von (a) zu (b) im Bereich von 0,1 bis 4, vorzugsweise von 0,25 bis 1,25, vorhanden sind.

3. Konzentrat-Formulierung nach Anspruch 1 oder 2, umfassend mindestens:
(a) 20 bis 60 Gew.-% Fettsäure(n)-Polyethylenglykolester-Tensid(e);
(b) 20 bis 80 Gew.-% eines nicht veresterten Pflanzenöls oder Gemischen davon;
(c) 1 bis 5 Gew.-% Phyllosilikat(e) und insbesondere modifiziertes Hectorit; und
(d) 0,3 bis 3 Gew.-% Aktivator des Phyllosilikats bzw. der Phyllosilikate und insbesondere Propylencarbonat.

4. Konzentrat-Formulierung nach einem der vorhergehenden Ansprüche, **dadurch gekennzeichnet, dass** sie ferner mindestens einen Inhaltsstoff umfasst, der aus Salzen wie Natriumcarbonat, Natriumhydrogencarbonat, Ammoniumsulfat oder deren Gemischen, Hydrokolloiden wie Guar sowie deren Gemischen ausgewählt ist.

5. Verwendung einer Konzentrat-Formulierung nach einem der vorherigen Ansprüche zur Herstellung einer flüssigen wässrigen Emulsion oder einer Suspoemulsion.

6. Verwendung einer Konzentrat-Formulierung nach einem der Ansprüche 1 bis 5 zur Herstellung einer landwirtschaftlichen Öldispersion.

7. Verfahren zur Erzeugung einer emulgierbaren und stabilen landwirtschaftlichen Öldispersion, die
(a) mindestens ein Fettsäure-Polyethylenglykolester-Tensid als nichtionisches Tensid,
(b) ein Flüssigmedium, das ganz oder teilweise aus mindestens einem nicht veresterten Pflanzenöl oder Gemischen davon gebildet ist,
(c) mindestens ein Phyllosilikat,
(d) mindestens einen Aktivator des Phyllosilikats und
(e) mindestens einen landwirtschaftlichen Wirkstoff umfasst, wobei die Komponenten (a) und (b) in einem Gewichtsverhältnis von (a) zu (b) im Bereich von 0,25 bis 4 und vorzugsweise von 0,25 bis 1,25 vorhanden sind, umfassend den Schritt, bei dem eine Konzentrat-Formulierung nach einem der Ansprüche 1 bis 4 mit mindestens einem landwirtschaftlichen Wirkstoff gemischt wird.

## Revendications

1. Formulation de concentré non aqueuse, émulsifiable et versable comprenant :
(a) au moins 20 % en poids d'au moins un tensioactif non ionique choisi parmi les tensioactifs d'esters de polyéthylène glycol d'acides gras, par rapport au poids total de la formulation de concentré ;
(b) un milieu liquide formé en totalité ou en partie d'au moins une huile végétale non estérifiée ou de mélanges de celles-ci ;
(c) au moins un phyllosilicate, ledit phyllosilicate étant présent en une teneur inférieure ou égale à 5 % en poids par rapport au poids total de la formulation de concentré ; et
(d) au moins un activateur dudit phyllosilicate.

2. Formulation de concentré selon la revendication 1, dans laquelle les composants (a) et (b) sont présents en un rapport pondéral (a)/(b) allant de 0,1 à 4, de préférence de 0,25 à 1,25.

3. Formulation de concentré selon la revendication 1 ou 2, comprenant au moins :
(a) 20 à 60 % en poids de tensioactif(s) d'ester(s) de polyéthylène glycol d'acide(s) gras ;
(b) de 20 à 80 % en poids d'une huile végétale non estérifiée ou de mélanges de celles-ci ;
(c) 1 à 5 % en poids de phyllosilicate(s) et en particulier d'hectorite modifiée ; et
(d) 0,3 à 3 % en poids d'activateur dudit ou desdits phyllosilicate(s) et en particulier de carbonate de propylène.

4. Formulation de concentré selon l'une quelconque des revendications précédentes, **caractérisée en ce qu'**elle comprend en outre au moins un ingrédient choisi parmi les sels tels que le carbonate de sodium, le bicarbonate de sodium, le sulfate d'ammonium ou leurs mélanges ; les hydrocolloïdes tels que le guar ; et leurs mélanges.

5. Utilisation d'une formulation de concentré selon l'une quelconque des revendications précédentes pour préparer une émulsion aqueuse liquide ou une suspoémulsion.

6. Utilisation d'une formulation de concentré selon l'une quelconque des revendications 1 à 5 pour la préparation d'une dispersion d'huile agricole.

7. Procédé de fabrication d'une dispersion d'huile agricole émulsifiable et stable comprenant :
(a) au moins un ester de polyéthylène glycol d'acide gras comme tensioactif non ionique ;
(b) un milieu liquide formé en totalité ou en partie d'au moins une huile végétale non estérifiée ou de mélanges de celles-ci ;
(c) au moins un phyllosilicate ;
(d) au moins un activateur dudit phyllosilicate ; et
(e) au moins une matière active agricole ;
dans lequel les composants (a) et (b) sont présents en un rapport pondéral (a)/(b) allant de 0,25 à 4, et de préférence de 0,25 à 1,25, comprenant l'étape de mélange d'une formulation de concentré selon l'une quelconque des revendications 1 à 4 avec au moins une matière active agricole.
